# EUROPÄISCHE PATENTSCHRIFT

(11) **EP 2 960 450 B1**
(45) Veröffentlichungstag und Bekanntmachung des Hinweises auf die Patenterteilung: **14.03.2018**
(21) Anmeldenummer: 15000201.2
(22) Anmeldetag: 23.01.2015
(51) Int. Cl.: F01N 3/031, B01D 46/00

(54) **Abgasanlage für Brennkraftmaschinen**
Exhaust gas system for combustion engines
Système d'échappement pour moteurs à combustion interne

(30) Priorität: 25.06.2014 DE 102014009262
(43) Veröffentlichungstag der Anmeldung: 30.12.2015
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A1- 0 638 709
- DE-A1- 10 000 921
- DE-A1- 10 206 805
- DE-A1-102007 013 500
- DE-T2- 3 876 696
- DE-T2- 69 432 977
- US-A- 5 377 716
- US-A1- 2013 111 879

## Beschreibung

Die Erfindung betrifft eine Abgasanlage für Brennkraftmaschinen nach dem Oberbegriff des Anspruchs 1.

Um die bei der Verbrennung von Kraftstoffen in Brennkraftmaschinen, beispielsweise Dieselmotoren, entstehenden Schadstoffe zu verringern, ist der Einsatz von Abgasreinigungs- bzw. Abgasnachbehandlungseinrichtungen allgemein bekannt. Derartige Abgasreinigungseinrichtungen zur Nachbehandlung des Abgases können zum Beispiel Partikelfilter, SCR-Katalysatoren etc. sein.

Immer strengere Abgasvorschriften machen mittlerweile auch bei in Schiffen eingesetzten Motoren eine Abgasnachbehandlung, zum Beispiel in Form von Partikelfiltern, SCR-Katalysatoren zur NOx-Reduzierung und DeSOx-Anlagen erforderlich.

Insbesondere bei relativ geringen Strömungsquerschnitten in den Abgasreinigungseinrichtungen, wie dies beispielsweise bei Schiffsmotoren der Fall ist, kann es gegebenenfalls zu einer Verstopfung dieser Abgasreinigungseinrichtungen kommen. Dies ist umso mehr der Fall, wenn die Brennkraftmaschine mit Kraftstoffen schlechter Qualität betrieben wird, was ebenfalls relativ häufig bei Schiffsmotoren der Fall ist, aber ebenso bei Brennkraftmaschinen von Fahrzeugen der Fall sein kann.

Eine derartige fortschreitende Verstopfung einer Abgasreinigungseinrichtung führt zu einem starken Anstieg des Abgasgegendrucks und hat eine eventuelle Motorschädigung zur Folge. Aus diesem Grund werden Bypassleitungen vorgesehen, mittels denen die Abgasreinigungseinrichtungen bei Bedarf überbrückt werden können. Dadurch wird somit auch im Störungsfall ein sicherer Betrieb der Brennkraftmaschine und damit der Betrieb eines Fahrzeuges bzw. die Manövrierbarkeit eines Schiffes sichergestellt.

Um die Bypassleitung zu öffnen werden dabei üblicherweise Absperrvorrichtungen in Form von Abgasklappen oder Abgasschiebern verwendet. Allerdings besteht hier, aufgrund der Tatsache, dass sie nur sehr selten verwendet und zusätzlich permanent dem Abgas ausgesetzt sind, die Gefahr, dass sie sich festsetzen und nicht mehr geöffnet werden können. Zudem ist meist eine Luftspülung an den Wellendurchgängen der Abgasklappe vorzusehen, um einen Abgasaustritt in die Umgebung zu vermeiden. Dies führt zu einem relativ hohen apparativen Aufwand und zu hohen Investitions- und Betriebskosten, da permanent Druckluft zur Verfügung gestellt werden muss.

Des Weiteren ist es aus der DE 102 06 805 A1 bekannt, einen Rußfilter zur Reinigung von Abgasen einer Verbrennungsanlage eines Motors eines Kraftfahrzeuges mit Mitteln zur Reduzierung eines in dem Rußfilter herrschenden Abgasgegendrucks vorzusehen, wobei die Mittel zur Reduzierung des Abgasgegendrucks wenigstens eine Sollbruchstelle in einem Filterkörper des Filters und/oder in einer Bypassleitung des Filters aufweisen sollen. Die Sollbruchstelle in der Bypassleitung ist dabei als Berstplatte ausgebildet. Damit soll bei verstopftem Rußfilter ein Absterben bzw. eine Beschädigung der Brennkraftmaschine vermieden werden. Die in der Bypassleitung angeordnete Berstplatte kann dabei in Abhängigkeit von einem gemessenen Abgasgegendruck mechanisch zum Bersten gebracht werden, soll jedoch hauptsächlich ohne Notwendigkeit zusätzlicher Maßnahmen zum Bersten gebracht werden.

Ein Problem derartiger Berstplatten in Abgasanlagen einer Brennkraftmaschine ist jedoch, dass diese bei einem eventuellen betriebsbedingten erwünschten Anstieg des Abgasgegendrucks in unerwünschter Weise bersten können und somit die Bypassleitung in unerwünschter Weise freigegeben wird.

Demgegenüber ist es Aufgabe der vorliegenden Erfindung, eine Abgasanlage für Brennkraftmaschinen zu schaffen, mittels der die bedarfsweise Freigabe eines, einer Abgasreinigungseinrichtung zugeordneten Bypass- bzw. Abzweigkanals auf funktionssichere Weise gesteuert werden kann.

Diese Aufgabe wird gelöst mit den Merkmalen der unabhängigen Patentansprüche. Vorteilhafte Ausgestaltungen hierzu sind Gegenstand der darauf rückbezogenen Unteransprüche.

Gemäß Anspruch 1 wird eine Abgasanlage für Brennkraftmaschinen vorgeschlagen, die eine Abgasleitung aufweist, in der wenigstens eine Abgasreinigungseinrichtung (zum Beispiel ein Partikelfilter, ein SCR-Katalysator und/oder eine DeSOx-Anlage etc.) angeordnet ist. Ferner weist die Abgasanlage wenigstens einen parallel zu der wenigstens einen Abgasreinigungseinrichtung angeordneten Abzweigkanal (zum Beispiel ein stromauf der wenigstens einen oder stromauf wenigstens einer Abgasreinigungseinrichtung abzweigender Abzweigkanal), insbesondere in Form einer Abzweig- bzw. Bypassleitung, auf, der durch eine Berstscheibeneinrichtung abgesperrt ist, wobei die Berstscheibeneinrichtung so ausgebildet ist, dass diese bei einem definierten Berstdruck birst und die Abgasströmung durch den Abzweigkanal freigibt. Erfindungsgemäß ist vorgesehen, dass die Berstscheibeneinrichtung durch wenigstens zwei in Strömungsrichtung hintereinander angeordnete, in einer Anlageverbindung aneinander anliegende, Berstscheiben gebildet ist.

Mit einer derartigen Berstscheibeneinrichtung aus mehreren Berstscheiben wird die konstruktive Flexibilität bei der Auslegung der Berstscheibeneinrichtung auf einen definierten bzw. gewünschten Druck wesentlich erhöht. So können die einzelnen Berstscheiben gegebenenfalls unterschiedlich ausgebildet und ausgelegt sein und damit jede für sich unterschiedlichen Berstdrücken standhalten, was vorteilhaft zur Auslegung der Berstscheibeneinrichtung auf einen gewünschten Berstdruck ausgenutzt werden kann. Auch die Redundanz kann dadurch wesentlich erhöht werden, in dem zum Beispiel eine stromab liegende, hintere Berstscheibe auf einen höheren Berstdruck ausgelegt wird, als eine stromauf liegende, vordere Berstscheibe, um nur ein Beispiel zu nennen.

Die Begrifflichkeit Abzweigkanal ist hierbei in einem umfassenden Sinne zu verstehen und soll nicht nur solche Lösungen umfassen, bei denen der Kanal durch eine separate Leitung gebildet ist. Vielmehr soll dieser Begriff ausdrücklich jedwede Ausgestaltung umfassen, mit der ein Abgasstrom im Sinne eines Bypasses umlenkbar bzw. ein Teilstrom von einem Abgasstrom abzweigbar ist und somit den vorgegebenen (Haupt-)Strömungsweg eines Abgasstroms verlässt.

Des Weiteren weist jede der Berstscheiben wenigstens eine Sollbruchstelle auf. Die Sollbruchstellen können grundsätzlich so vorgesehen bzw. so ausgebildet sein, dass die Berstscheiben gleichen oder unterschiedlichen Berstdrücken standhalten können. Damit ist eine individuelle Anpassung und Auslegung an den jeweiligen Einsatzfall möglich. Es ergeben sich mit der erfindungsgemäßen Lösung somit erhebliche konstruktive Freiheiten, wie diese beim Vorsehen einer einzigen Berstscheibe gemäß dem Stand der Technik der DE 102 06 805 A1 nicht gegeben sind.

Die wenigstens eine Sollbruchstelle wird durch eine die Berstscheibenwand durchdringende Perforation gebildet. Bevorzugt weist eine, Sollbruchstellen aufweisende Berstscheibe Perforationen auf, die ein genau definiertes Sollbruchstellenmuster ausbilden. Damit ist es möglich, das Bersten der Berstscheibe bei Überschreiten des Berstdruck-Schwellwertes definiert und in gewünschter Weise kontrolliert ablaufen zu lassen.

Die pro Berstscheibe wenigstens eine Sollbruchstelle wird durch eine Perforation gebildet, wobei die Berstscheiben in einer Anlagenverbindung aneinander anliegen. Um die Gasdichtheit dieser Berstscheibenanordnung sicherzustellen, sind die Perforationen zweier aneinander anliegender Berstscheiben so gegeneinander versetzt, dass die Perforationen der einen Berstscheibe jeweils durch einen Wandbereich der anderen Berstscheibe abgedeckt sind.

Das Sollbruchstellenmuster kann ebenfalls grundsätzlich auf unterschiedlichste Art und Weise ausgebildet sein. Zum Beispiel kann lediglich eine zentrale bzw. mittige Sollbruchstelle an einer Berstscheibe vorgesehen sein. Besonders bevorzugt ist jedoch ein Aufbau, bei dem mehrere voneinander beabstandete und sich von einem mittleren Berstscheibenbereich ausgehend nach radial außen zum Berstscheibenrand hin erstreckende Sollbruchstellen vorgesehen sind, die eine Sollbruchstellenlinie ausbilden. Wenigstens zwei derartiger Sollbruchstellenlinien können dann in Umfangsrichtung der Berstscheibe dergestalt voneinander beabstandet sein, dass die zwischen zwei Sollbruchstellenlinien liegenden Berstscheibenbereiche ein verlagerbares, insbesondere verschwenkbares, Berstscheibenwandsegment ausbilden. Diese Berstscheibenwandsegmente bilden dann nach dem Bersten regelmäßig Lappen auf, die sehr gut und kontrolliert verlagert bzw. verschwenkt werden können zur definierten Freigabe der Abgasströmung durch den Abzweigkanal.

Der Berstscheibeneinrichtung aus den mehreren Berstscheiben kann eine mittels einer Steuereinrichtung in Abhängigkeit von wenigstens einem definiert vorgegebenen Abgasparameter, insbesondere in Abhängigkeit von einem Abgasgegendruck, ansteuerbare und aktivierbare Bersthilfe zugeordnet sein, bei deren Aktivierung ein Berstdruck, insbesondere ein zusätzlicher Berstdruck, auf die Berstscheibeneinrichtung aufgebracht wird. Eine derartige zusätzliche Bersthilfe kann zum Beispiel in Abhängigkeit von einer mittels Sensoren erfolgenden Messung des Abgasgegendrucks über einer Abgasreinigungseinrichtung aktiviert werden, um sicher zu stellen, dass die Berstscheibeneinrichtung genau dann birst, wenn dies erforderlich ist. Eine derartige Bersthilfe kann somit auch eine zusätzliche Redundanz darstellen, die die Betriebssicherheit einer Brennkraftmaschine erhöht bzw. deren Schädigung, zum Beispiel im Falle einer Verstopfung einer Abgasreinigungseinrichtung zuverlässig vermeidet. Selbstverständlich kann die Aktivierung auch in Abhängigkeit von anderen Abgasparametern erfolgen, zum Beispiel in Abhängigkeit einer Abgastemperatur und/oder einer Stoffkonzentration im Abgas, um nur einige weitere Beispiele zu nennen.

Die Bersthilfe kann zum Beispiel durch wenigstens ein elektrisches Heizelement gebildet sein, das an einer definierten Stelle einer Berstscheibe, insbesondere zentral und/oder mittig an einer Berstscheibe und/oder im Bereich zwischen zwei benachbarten und/oder in einer im Wesentlichen flächigen Anlageverbindung aneinander anliegenden Berstscheiben, angeordnet ist und das den zugeordneten Berstscheibenwandbereich im aktivierten Zustand erhitzt, insbesondere thermisch zerstört. Alternativ oder zusätzlich kann die Bersthilfe durch wenigstens eine Detonationseinrichtung bzw. wenigstens ein Sprengelement gebildet sein, das an einer definierten Stelle einer Berstscheibe, insbesondere zentral und/oder mittig an einer Berstscheibe und/oder im Bereich zwischen zwei benachbarten und/oder in einer im Wesentlichen flächigen Anlageverbindung aneinander anliegenden Berstscheiben, angeordnet ist und das den zugeordneten Berstscheibenwandbereich im aktivierten Zustand durch Zünden einer Sprengladung zerstört. Die Bersthilfe kann somit auch zwischen zwei benachbarten und bevorzugt im Wesentlichen flächig aneinander anliegenden Berstscheiben aufgenommen und/oder angeordnet sein, was den Vorteil hat, dass die Bersthilfe durch die beiden Berstscheiben vom heißen und korrosiven Abgas abgetrennt und damit geschützt ist. Hierdurch können wesentlich kostengünstigere Materialen für diese Komponenten eingesetzt werden.

Gemäß einer weiteren erfindungsgemäßen Ausführungsform kann, alternativ oder zusätzlich, als Bersthilfe eine Zuführleitung vorgesehen sein, mittels der ein Fluid, insbesondere Druckluft oder Wasser als fluides Medium, zwischen zwei benachbarte Berstscheiben dergestalt einbringbar ist, dass zwischen den beiden Berstscheiben mittels des Fluids ein die Zerstörung der Berstscheiben bewirkender Druck aufbringbar ist. Auch bei dieser Ausführungsvariante besteht der Vorteil darin, dass die Zuführung bzw. die dafür notwendigen Ventile durch die beiden Berstscheiben vom heißen und korrosiven Abgas abgetrennt und damit geschützt sind, wodurch wesentlich kostengünstigere Materialen für diese Komponenten eingesetzt werden können.

Der Abzweigkanal, der zum Beispiel durch eine separate Abzweig- bzw. Bypassleitung gebildet ist, mündet bevorzugt stromab der wenigstens einen Abgasreinigungseinrichtung oder stromab wenigstens einer Abgasreinigungseinrichtung wieder in die Abgasleitung ein. Der Abzweigkanal kann grundsätzlich aber auch eine nicht mehr in die Abgasleitung, von der sie abzweigt, einmündende Abgasleitung des Abgasstrangs sein.

Die Erfindung wird nachfolgend anhand einer Zeichnung näher erläutert.

Es zeigen:
- Fig. 1: schematisch und beispielhaft eine Abgasanlage einer Brennkraftmaschine mit einer Abgasleitung, in der eine Abgasreinigungseinrichtung angeordnet ist und mit einer Bypassleitung als Abzweigleitung zur Abgasreinigungseinrichtung,
- Fig. 2a: beispielhaft eine Ausführungsform einer erfindungsgemäßen Berstscheibeneinrichtung in einer Vorderansicht,
- Fig. 2b: die Berstscheibeneinrichtung der Fig. 2a in einer Rückansicht,
- Fig. 2c: die Berstscheibeneinrichtung der Fig. 2a und 2b in einer Seitenansicht,
- Fig. 3: schematisch eine Berstscheibeneinrichtung mit einem elektrischen Heizelement als Bersthilfe,
- Fig. 4: eine Seitenansicht eine Berstscheibeneinrichtung mit einem Sprengelement als Bersthilfe,
- Fig. 5: eine schematische Darstellung einer weiteren nicht erfindungsgemäßen Abgasanlage mit einem abgasleitungsseitig ausgebildeten bzw. eingesetzten Gehäuse, in dem sowohl die Berstscheibeneinrichtung als auch die wenigstens eine Abgasreinigungseinrichtung aufgenommen ist,

- Fig. 6: schematisch eine Berstscheibeneinrichtung mit einer Fluid-Zuführleitung als Bersthilfe, die im Bereich zwischen zwei Berstscheiben mündet,
- Fig. 7: eine Seitenansicht eine Berstscheibeneinrichtung mit einem Sprengelement oder einem elektrischen Heizelement als Bersthilfe, die im Bereich zwischen zwei Berstscheiben angeordnet ist.

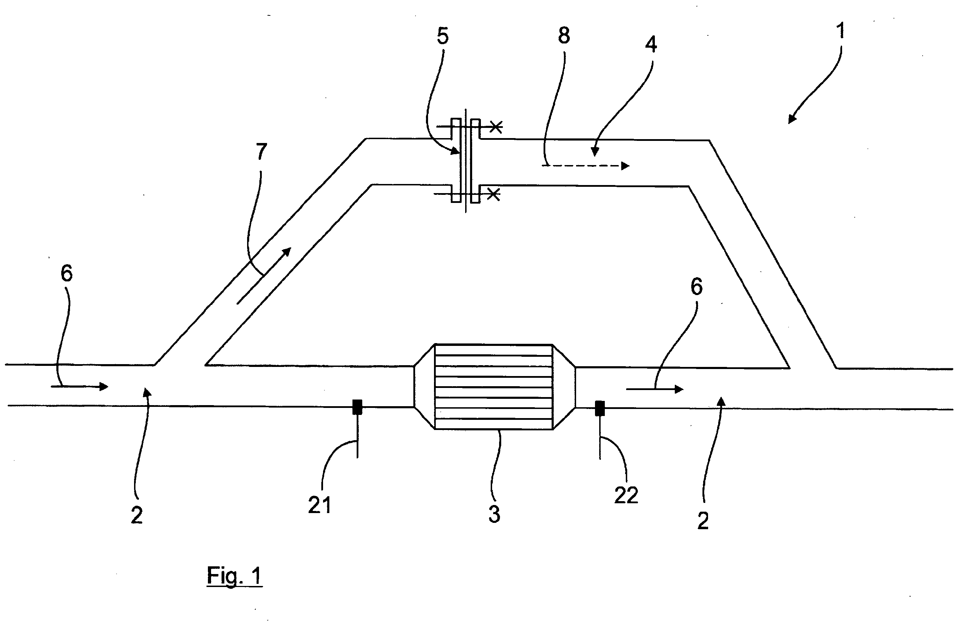

In der Fig.1 ist beispielhaft eine Abgasanlage 1 einer nicht näher gezeigten Brennkraftmaschine, zum Beispiel einer Dieselbrennkraftmaschine, dargestellt, die eine Abgasleitung 2 aufweist, die von der nicht gezeigten Brennkraftmaschine abgeht und in der hier lediglich beispielhaft eine Abgasreinigungseinrichtung 3, zum Beispiel ein SCR-Katalysator, angeordnet ist.

Stromauf der Abgasreinigungseinrichtung 3 zweigt eine als Bypassleitung ausgebildete Abzweigleitung 4 von der Abgasleitung 2 ab, die stromab der Abgasreinigungseinrichtung 3 wieder in die Abgasleitung 2 einmündet. Wie dies in der Fig. 1 lediglich äußerst schematisch und beispielhaft dargestellt ist, ist in der Abzweigleitung 4, im Grunde an beliebiger Stelle, eine Berstscheibeneinrichtung 5 angeordnet, die im unbeschädigten bzw. nicht aktivierten Zustand die Abzweigleitung 4 absperrt, so dass der Abgasstrom 6 vollständig über die Abgasreinigungseinrichtung 3 strömt und der erwünschten Reinigung bzw. Nachbehandlung unterzogen werden kann. Der in der schematischen Darstellung der Fig. 1 in die Abzweigleitung 4 einströmende Teilstrom 7 vermag daher bei einer Absperrung der Abzweigleitung 4 durch die Berstscheibeneinrichtung 5 nicht über die Abzweigleitung 4 zu strömen und damit nicht die Abgasreinigungseinrichtung 3 zu umgehen.

Für den Fall jedoch, dass sich zum Beispiel die Abgasreinigungseinrichtung 3 derart zusetzen bzw. verstopfen sollte, dass der Abgasstrom 6 nicht mehr in einem gewünschten Maße über die Abgasreinigungseinrichtung 3 geführt werden kann, wird der Abgasgegendruck stromauf der Abgasreinigungseinrichtung 3 wesentlich erhöht, was gleichzeitig auch einen erhöhten Druck auf die Berstscheibeneinrichtung 5 in der Abzweigleitung 4 bedeutet.

Überschreitet der auf die Berstscheibeneinrichtung 5 wirkende Druck einen definierten Schwellwert (Berstdruck) birst die Berstscheibeneinrichtung 5 und wird dadurch die Abgasströmung über die Abzweigleitung 4 freigegeben, wie dies in der Fig. 1 schematisch und beispielhaft durch den strichlierten Pfeil 8 dargestellt ist. Durch diesen Bypassbetrieb wird sichergestellt, dass es zu keiner Störung der Brennkraftmaschine bzw. zu keinem Abwürgen der Brennkraftmaschine kommen kann.

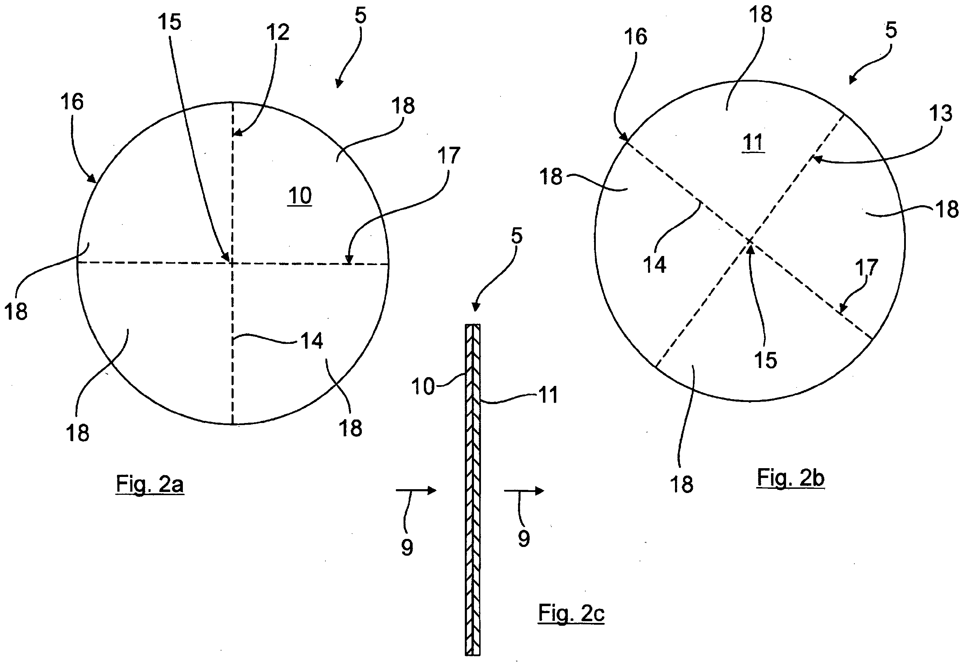

In der Fig. 2a bis 2c ist nunmehr eine beispielhafte erste Ausführungsform einer erfindungsgemäßen Berstscheibeneinrichtung 5 gezeigt. Diese Berstscheibeneinrichtung 5 ist hier durch zwei in Strömungsrichtung 9 hintereinander angeordnete und in einer flächigen Anlageverbindung aneinander anliegende Berstscheiben 10, 11 gebildet, die jeweils, wie dies insbesondere aus den Fig. 2a und 2b ersichtlich ist, ein definiertes Sollbruchstellenmuster 12, 13 aufweisen können. Die Sollbruchstellenmuster 12, 13 können dabei grundsätzlich gleich ausgebildet sein, wie dies in der Fig. 2a und 2b dargestellt ist, oder können alternativ dazu aber auch unterschiedlich ausgebildet sein.

Die einzelnen Sollbruchstellen 14 können dabei entweder durch die Berstscheibenwand nicht durchdringende Kerben oder alternativ durch die Berstscheibenwand durchdringende Perforationen gebildet sein. Auch die Ausbildung der Sollbruchstellen 14 einer Berstscheibe 10, 11 mit sowohl Kerben als auch Perforationen ist grundsätzlich selbstverständlich jederzeit möglich.

Für den Fall, dass die Sollbruchstellen 14 durch Perforationen gebildet sind, das heißt durch die Berstscheibenwand durchdringende Durchbrüche gebildet sind, werden die Perforationen zweier aneinander anliegender Berstscheiben 10, 11 bevorzugt so gegeneinander verdreht bzw. versetzt (siehe Fig. 2a und 2b) dass die Perforationen der einen Berstscheibe 10 jeweils durch einen Wandbereich der anderen Berstscheibe 11 abgedeckt sind. Damit ist die Gasdichtheit der Berstscheibeneinrichtung 5 sichergestellt. Bei lediglich durch nicht durchdringende Kerben ausgebildeten Sollbruchstellen ist dies selbstverständlich nicht erforderlich.

Wie dies aus den Fig. 2a und 2b weiter ersichtlich ist, weisen hier beispielhaft beide Berstscheiben 10, 11 jeweils mehrere voneinander beabstandete und sich von einem mittleren Berstscheibenbereich 15 ausgehend nach radial außen zum Berstscheibenrand 16 hin erstreckende Sollbruchstellen 14 auf, die jeweils eine Sollbruchstellenlinie 17 ausbilden. Diese Sollbruchstellenlinien sind in Umfangsrichtung der Berstscheiben 10, 11 jeweils, zum Beispiel gleichmäßig, voneinander beabstandet, so dass die jeweils zwischen zwei Sollbruchstellenlinien 17 liegenden Berstscheibenbereiche ein beim Anliegen eines Berstdruck-Schwellwertes verlagerbares bzw. verschwenkbares Berstscheibenwandsegment 18 ausbilden.

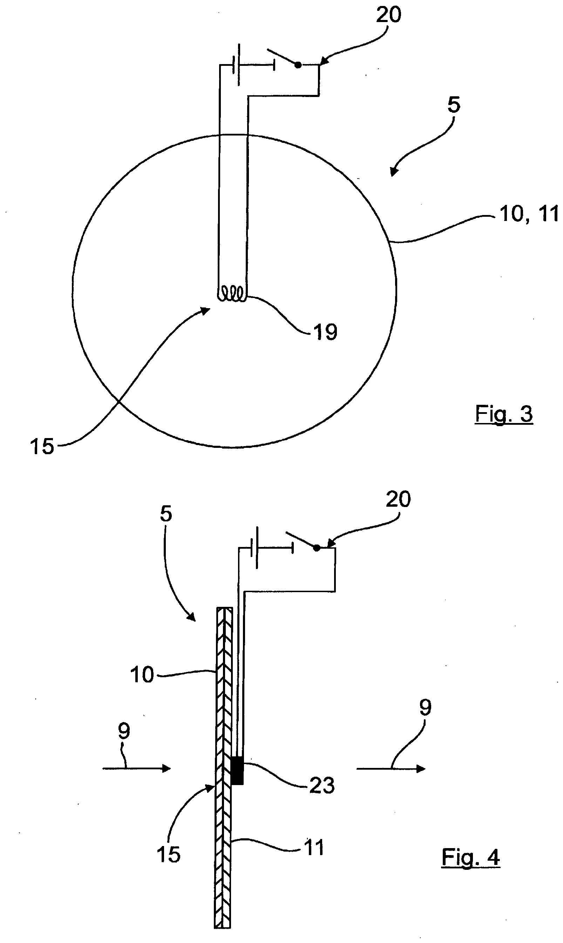

In der Fig. 3 ist eine schematische Vorder- bzw. Rückansicht der Berstscheibeneinrichtung 5 gezeigt, der eine durch ein elektrisches Heizelement 19 gebildete Bersthilfe, hier beispielhaft zentral bzw. mittig, zugeordnet ist, mittels der der zugeordnete Berstscheibenwandbereich im aktivierten Zustand des elektrischen Heizelementes 19 erhitzt und insbesondere thermisch zerstört werden kann.

Das elektrische Heizelement 19 ist hier mit einer lediglich beispielhaft dargestellten Steuereinrichtung 20 gekoppelt, die das elektrische Heizelement 19 bevorzugt dann ansteuert, wenn zum Beispiel mittels einer Sensoranordnung aus stromauf bzw. stromab der Abgasreinigungseinrichtung 3 angeordneten Sensoren 21, 22 festgestellt wird, dass die Abgasströmung 8 über die Abzweigleitung 4 freizugeben ist. Mittels der Sensoren 21, 22 kann zum Beispiel der Differenzdruck gemessen werden. Alternativ oder zusätzlich können aber selbstverständlich Temperatur- und/oder NOx-Sensoren herangezogen werden, um die Aktivierung des elektrischen Heizelementes 19 als Bersthilfe vorzunehmen.

Anstelle der Anordnung von zwei Sensoren 21, 22 kann grundsätzlich auch nur ein Sensor stromauf oder stromab der Abgasreinigungseinrichtung 3 vorgesehen sein.

Wie in der Fig. 3 weiter ersichtlich, ist hier zumindest eine der Berstscheiben 10, 11 optional nicht mit Sollbruchstellen 14 versehen, weil im hier gezeigten Beispielfall der Fig. 3 mittels dem elektrischen Heizelement 19 als Bersthilfe eine zusätzliche Redundanz vorhanden ist, die das betriebssichere Bersten der Berstscheibeneinrichtung 5 in den jeweils gewünschten Betriebssituationen sicherstellt.

Das zuvor zur Fig. 3 Ausgeführte gilt in analoger Weise für die eine Seitenansicht einer Berstscheibeneinrichtung 5 zeigende Ausführungsform der Fig. 4, bei der dem zentralen bzw. mittigen Berstscheibenbereich ein Sprengelement 23 mit einer Sprengladung zugeordnet ist, die den zugeordneten Berstscheibenwandbereich im aktivierten Zustand durch Zünden der Sprengladung zerstört.

Auch wenn hier bei den Ausführungsformen der Fig. 3 und 4 die Bersthilfe lediglich auf einer Seite der Berstscheibeneinrichtung 5 beispielhaft und schematisch gezeigt ist, kann diese selbstverständlich auch auf der anderen Seite angeordnet werden, das heißt im vorliegenden Beispielfall der Fig. 3 und 4, stromauf der Berstscheibeneinrichtung 5 angeordnet sein. Auch eine beiderseitige Anordnung ist ebenso möglich wie eine Anordnung der Bersthilfen an unterschiedlichen Stellen der jeweiligen Berstscheibe 10, 11.

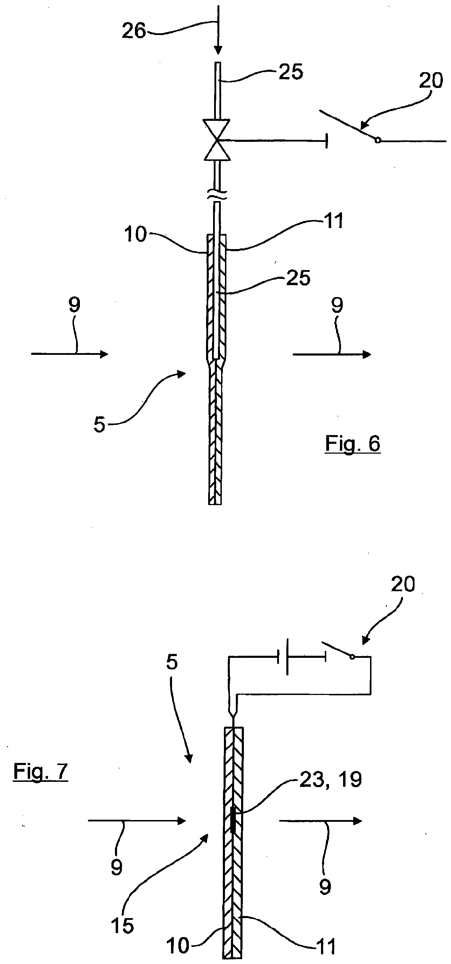

Ebenfalls ist es möglich, wie in der Fig. 7 dargestellt, dass das Sprengelement 23 oder das elektrische Heizelement 19 zwischen zwei benachbarten und bevorzugt im Wesentlichen flächig aneinander anliegenden Berstscheiben 10, 11 aufgenommen und/oder angeordnet ist, was den Vorteil hat, dass die Bersthilfe dann insgesamt durch die beiden Berstscheiben 10, 11 vom heißen und korrosiven Abgas abgetrennt werden kann.

Im zur Ausführungsform gemäß Fig. 7 analoger Weise kann, wie in der Fig. 6 dargestellt, als Bersthilfe eine Zuführleitung 25 vorgesehen sein, mittels der ein Fluid 26, insbesondere Druckluft oder Wasser, zu definierten Zeiten und in definierter Menge dergestalt zwischen zwei benachbarte und bevorzugt im Wesentlichen flächig aneinander anliegende Berstscheiben 10, 11 eingebracht werden kann, dass zwischen den beiden Berstscheiben 10, 11 ein die Zerstörung derselben bewirkender Druck aufgebaut wird. Auch hier erfolgt die Aktivierung wiederum gesteuert mitttels einer Steuereinrichtung 20.

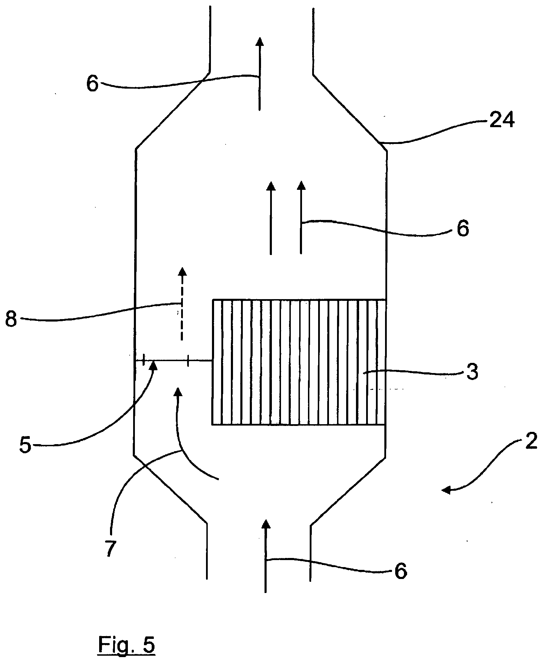

In der Fig. 5 ist eine weitere nicht erfindungsgemäße Abgasanlage gezeigt, bei der die wenigstens eine Abgasreinigungseinrichtung 3, zum Beispiel ein SCR-Katalysator, zusammen mit einer Berstscheibeneinrichtung 5 in einem gemeinsamen Gehäuse 24 angeordnet bzw. integriert sind. Die einen gehäuseseitigen Abzweigkanal 4 verschließende Berstscheibeneinrichtung 5 und die Abgasreinigungseinrichtung 3 sind hierbei strömungstechnisch parallel angeordnet, so dass bei intakter Berstscheibeneinrichtung 5 das Abgas alleine durch die Abgasreinigungseinrichtung 3 strömt. Bei einem definiert hohen Berstdruck birst dagegen die Berstscheibeneinrichtung 5 in der zuvor beschriebenen Art und Weise, so dass zumindest ein Teilstrom 7 dann auch durch den Abzweigkanal 4 strömen kann (Abgasströmung 8). Die Berstscheibeneinrichtung 3 liegt hier nur beispielhaft seitlich neben der Abgasreinigungseinrichtung 3. Gegebenenfalls kann die Abgasreinigungseinrichtung auch zentral im Gehäuse 24 gehaltert sein und umlaufend von einer entsprechend gestalteten Berstscheibeneinrichtung 5 umgeben sein. Auch wenn die Berstscheibeneinrichtung 5 hier bevorzugt so ausgebildet ist, wie dies zuvor ausführlich beschrieben worden ist, nämlich durch wenigstens zwei in Strömungsrichtung 9 hintereinander angeordnete, insbesondere in einer flächigen Anlageverbindung anliegende, Berstscheiben 10, 11 gebildet ist, kann diese bei der in der Fig. 5 beispielhaft gezeigten gehäuseintegrierten Lösung selbstverständlich ausdrücklich auch durch eine herkömmliche Berstscheibe bzw. Berstplatte, wie sie zum Beispiel in der DE 102 06 805 A1 beschrieben ist, und damit durch jedwede geeignete Bersteinrichtung gebildet sein.

### Bezugszeichenliste

- 1: Abgasanlage
- 2: Abgasleitung
- 3: Abgasreinigungseinrichtung
- 4: Abzweigleitung
- 5: Berstscheibeneinrichtung
- 6: Abgasstrom
- 7: Teilstrom
- 8: Abgasströmung
- 9: Strömungsrichtung
- 10: Berstscheibe
- 11: Berstscheibe
- 12: Sollbruchstellenmuster
- 13: Sollbruchstellenmuster
- 14: Sollbruchstellen
- 15: mittlerer Berstscheibenbereich
- 16: Berstscheibenrand
- 17: Sollbruchstellenlinie
- 18: Berstscheibenwandsegment
- 19: elektrisches Heizelement
- 20: Steuereinrichtung
- 21: Sensor
- 22: Sensor
- 23: Sprengelement
- 24: Gehäuse
- 25: Zuführleitung
- 26: Fluid

## Patentansprüche

1. Abgasanlage für Brennkraftmaschinen,
mit einer Abgasleitung (2), in der wenigstens eine Abgasreinigungseinrichtung (3) angeordnet ist, und
mit wenigstens einem parallel zu der wenigstens einen Abgasreinigungseinrichtung (3) angeordneten Abzweigkanal (4), der durch eine Berstscheibeneinrichtung (5) abgesperrt ist, wobei die Berstscheibeneinrichtung (5) so ausgebildet ist, dass diese bei einem definierten Berstdruck birst und die Abgasströmung durch den Abzweigkanal (4) freigibt,
wobei die Berstscheibeneinrichtung (5) durch wenigstens zwei in Strömungsrichtung (9) hintereinander angeordnete Berstscheiben (10, 11) gebildet ist,
**dadurch gekennzeichnet,**
**dass** jede der Berstscheiben (10, 11) wenigstens eine Sollbruchstelle (14) aufweist,
**dass** die wenigstens eine Sollbruchstelle (14) durch eine die Berstscheibenwand durchdringende Perforation gebildet ist,
**dass** die pro Berstscheibe (10, 11) wenigstens eine Sollbruchstelle (14) durch eine Perforation gebildet ist,
**dass** die Berstscheiben (10, 11) in einer Anlageverbindung aneinander anliegen, und
**dass** die Perforationen zweier aneinander anliegender Berstscheiben (10, 11) so gegeneinander versetzt sind, dass die Perforationen der einen Berstscheibe (10) jeweils durch einen Wandbereich der anderen Berstscheibe (11) abgedeckt sind.

2. Abgasanlage nach Anspruch 1, **dadurch gekennzeichnet,**
**dass** mehrere voneinander beabstandete und sich von einem mittleren Berstscheibenbereich (15) ausgehend nach radial außen zum Berstscheibenrand (16) hin erstreckende Sollbruchstellen (14) vorgesehen sind, die eine Sollbruchstellenlinie (17) ausbilden, und
**dass** mehrere derartiger Sollbruchstellenlinien (17) in Umfangsrichtung der Berstscheibe (10, 11) voneinander beabstandet sind dergestalt, dass die zwischen zwei Sollbruchstellenlinien (17) liegenden Berstscheibenbereiche ein verlagerbares, insbesondere verschwenkbares, Berstscheibenwandsegment (18) ausbilden.

3. Abgasanlage nach einem der vorhergehenden Ansprüche, **dadurch gekennzeichnet, dass** der Berstscheibeneinrichtung (5) aus den mehreren Berstscheiben (10, 11) eine mittels einer Steuereinrichtung (20) in Abhängigkeit von wenigstens einem definiert vorgegebenen Abgasparameter, insbesondere in Abhängigkeit von einem Abgasgegendruck, ansteuerbare und aktivierbare Bersthilfe zugeordnet ist, bei deren Aktivierung ein Berstdruck, insbesondere ein zusätzlicher Berstdruck, auf die Berstscheibeneinrichtung (5) aufbringbar ist.

4. Abgasanlage nach Anspruch 3, **dadurch gekennzeichnet, dass** die Bersthilfe durch wenigstens ein elektrisches Heizelement (19) gebildet ist, das an einer definierten Stelle einer Berstscheibe (10, 11), insbesondere zentral und/oder mittig an einer Berstscheibe und/oder im Bereich zwischen zwei benachbarten Berstscheiben (10, 11), angeordnet ist und das den zugeordneten Berstscheibenwandbereich im aktivierten Zustand erhitzt, insbesondere thermisch zerstört.

5. Abgasanlage nach Anspruch 3 oder 4, **dadurch gekennzeichnet, dass** die Bersthilfe durch wenigstens ein Sprengelement (23) gebildet ist, das an einer definierten Stelle einer Berstscheibe (10, 11), insbesondere zentral und/oder mittig an einer Berstscheibe und/oder im Bereich zwischen zwei benachbarten Berstscheiben (10, 11), angeordnet ist und das den zugeordneten Berstscheibenwandbereich im aktivierten Zustand durch Zünden einer Sprengladung zerstört.

6. Abgasanlage nach einem der Ansprüche 3 bis 5, **dadurch gekennzeichnet, dass** als Bersthilfe eine Zuführleitung (25) vorgesehen ist, mittels der ein Fluid, insbesondere Druckluft oder Wasser, zwischen zwei benachbarte Berstscheiben (10, 11) dergestalt einbringbar ist, dass zwischen den beiden Berstscheiben (10, 11) mittels des Fluids ein die Zerstörung der Berstscheiben (10, 11) bewirkender Druck aufbringbar ist.

7. Abgasanlage nach einem der vorhergehenden Ansprüche, **dadurch gekennzeichnet, dass** der Abzweigkanal (4) stromab der wenigstens einen Abgasreinigungseinrichtung (3) oder stromab wenigstens einer Abgasreinigungseinrichtung (3) wieder in die Abgasleitung (2) einmündet.

8. Fahrzeug, insbesondere Nutzfahrzeug, oder Wasserfahrzeug, insbesondere Schiff, mit einer Brennkraftmaschine mit einer Abgasanlage (1) nach einem der vorhergehenden Ansprüche.

## Claims

1. Exhaust system for combustion engines,
having an exhaust line (2), in which at least one exhaust gas purification device (3) is arranged, and
having at least one branch duct (4), which is arranged in parallel with the at least one exhaust gas purification device (3) and is shut off by a bursting disc device (5), wherein the bursting disc device (5) is designed in such a way that it bursts at a defined bursting pressure and allows the exhaust gas flow through the branch duct (4),
wherein the bursting disc device (5) is formed by at least two bursting discs (10, 11), which are arranged in series in the flow direction (9),
**characterized**
**in that** each of the bursting discs (10, 11) has at least one predetermined breaking point (14),
**in that** the at least one predetermined breaking point (14) is formed by a perforation which penetrates the bursting disc wall,
**in that** the at least one predetermined breaking point (14) on each bursting disc (10, 11) is formed by a perforation,
**in that** the bursting discs (10, 11) rest on one another in a contact joint, and
**in that** the perforations of two bursting discs (10, 11) resting on one another are offset relative to one another in such a way that the perforations in one bursting disc (10) are each covered by a wall region of the other bursting disc (11).

2. Exhaust system according to Claim 1, **characterized**
**in that** a plurality of predetermined breaking points (14), which are spaced apart and extend radially outwards towards the bursting disc rim (16) from a central bursting disc region (15), is provided, forming a line (17) of predetermined breaking points, and
**in that** a plurality of such lines (17) of predetermined breaking points is spaced apart in the circumferential direction of the bursting disc (10, 11) in such a way that the bursting disc regions situated between two lines (17) of predetermined breaking points form a movable, in particular pivotable, bursting disc wall segment (18).

3. Exhaust system according to one of the preceding claims, **characterized in that** the bursting disc device (5) consisting of the plurality of bursting discs (10, 11) is assigned a bursting aid that can be controlled and activated by means of a control device (20) in accordance with at least one defined exhaust gas parameter, in particular in accordance with an exhaust gas backpressure, upon the activation of which a bursting pressure, in particular an additional bursting pressure, can be applied to the bursting disc device (5).

4. Exhaust system according to Claim 3, **characterized in that** the bursting aid is formed by at least one electric heating element (19), which is arranged at a defined point on a bursting disc (10, 11), in particular centrally and/or centrically on a bursting disc and/or in the region between two adjacent bursting discs (10, 11), and which heats the associated bursting disc wall region in the activated state, in particular destroys it thermally.

5. Exhaust system according to Claim 3 or 4, **characterized in that** the bursting aid is formed by at least one explosive element (23), which is arranged at a defined point on a bursting disc (10, 11), in particular centrally and/or centrically on a bursting disc and/or in the region between two adjacent bursting discs (10, 11), and which destroys the associated bursting disc wall region in the activated state through ignition of an explosive charge.

6. Exhaust system according to one of Claims 3 to 5, **characterized in that** a feed line (25), by means of which a fluid, in particular compressed air or water, can be introduced between two adjacent bursting discs (10, 11) in such a way that a pressure which brings about the destruction of the bursting discs (10, 11) can be applied between the two bursting discs (10, 11), is provided as a bursting aid.

7. Exhaust system according to one of the preceding claims, **characterized in that** the branch duct (4) opens back into the exhaust line (2) downstream of the at least one exhaust gas purification device (3) or downstream of at least one exhaust gas purification device (3).

8. Vehicle, in particular commercial vehicle, or watercraft, in particular ship, having a combustion engine having an exhaust system (1) according to one of the preceding claims.

## Revendications

1. Système d'échappement pour moteurs à combustion interne, avec
une conduite de gaz d'échappement (2), dans laquelle est disposé au moins un dispositif d'épuration des gaz d'échappement (3), et
au moins un canal de dérivation (4) disposé en parallèle avec ledit au moins un dispositif d'épuration des gaz d'échappement (3), qui est fermé par un dispositif de disque de rupture (5), dans lequel le dispositif de disque de rupture (5) est réalisé de telle manière que celui-ci se rompe pour une pression de rupture définie et libère l'écoulement des gaz d'échappement à travers le canal de dérivation (4),
dans lequel le dispositif de disque de rupture (5) est formé par au moins deux disques de rupture (10, 11) disposés l'un derrière l'autre dans la direction d'écoulement (9),
**caractérisé en ce que**
chacun des disques de rupture (10, 11) présente au moins une zone de rupture théorique (14),
ladite au moins une zone de rupture théorique (14) est formée par une perforation traversant la paroi du disque de rupture,
ladite au moins une zone de rupture théorique (14) par disque de rupture (10, 11) est formée par une perforation,
les disques de rupture (10, 11) sont appliqués l'un contre l'autre dans un assemblage par contact, et
les perforations de deux disques de rupture (10, 11) appliqués l'un contre l'autre sont décalées l'une par rapport à l'autre, de telle manière que les perforations d'un disque de rupture (10) soient chaque fois recouvertes par une région de paroi de l'autre disque de rupture (11).

2. Système d'échappement selon la revendication 1, **caractérisé en ce que**
il est prévu plusieurs zones de rupture théorique (14) espacées l'une de l'autre et s'étendant depuis une région centrale du disque de rupture (15) radialement vers l'extérieur en direction du bord du disque de rupture (16), qui forment une ligne de zones de rupture théorique (17), et
plusieurs de ces lignes de zones de rupture théorique (17) sont espacées l'une de l'autre dans la direction périphérique du disque de rupture (10, 11), de telle manière que les régions du disque de rupture situées entre deux lignes de zones de rupture théorique (17) forment un segment déplaçable, en particulier pivotant, de la paroi du disque de rupture (18).

3. Système d'échappement selon l'une quelconque des revendications précédentes, **caractérisé en ce qu'**un auxiliaire de rupture pouvant être commandé et activé au moyen d'un dispositif de commande (20) en fonction d'au moins un paramètre prédéterminé défini des gaz d'échappement, en particulier en fonction d'une contrepression des gaz d'échappement, est associé au dispositif de disque de rupture (5) composé de plusieurs disques de rupture (10, 11), dont l'activation permet d'appliquer une pression de rupture, en particulier une pression de rupture additionnelle, au dispositif de disque de rupture (5).

4. Système d'échappement selon la revendication 3, **caractérisé en ce que** l'auxiliaire de rupture est formé par au moins un élément chauffant électrique (19), qui est disposé en un endroit défini d'un disque de rupture (10, 11), en particulier au centre et/ou au milieu sur un disque de rupture et/ou dans la région située entre deux disques de rupture voisins (10, 11) et qui chauffe dans l'état activé la région de paroi du disque de rupture associée, et en particulier la détruit thermiquement.

5. Système d'échappement selon la revendication 3 ou 4, **caractérisé en ce que** l'auxiliaire de rupture est formé par au moins un élément explosif (23), qui est disposé en un endroit défini d'un disque de rupture (10, 11), en particulier au centre et/ou au milieu d'un disque de rupture et/ou dans la région située entre deux disques de rupture voisins (10, 11) et qui dans l'état activé détruit la région de paroi du disque de rupture associée par allumage d'une charge explosive.

6. Système d'échappement selon l'une quelconque des revendications 3 à 5, **caractérisé en ce qu'**il est prévu comme auxiliaire de rupture une conduite d'alimentation (25), au moyen de laquelle un fluide, en particulier de l'air comprimé ou de l'eau, peut être introduit entre deux disques de rupture voisins (10, 11), de telle manière qu'il s'établisse au moyen du fluide entre les deux disques de rupture (10, 11) une pression provoquant la destruction des disques de rupture (10, 11).

7. Système d'échappement selon l'une quelconque des revendications précédentes, **caractérisé en ce que** le canal de dérivation (4) débouche de nouveau dans la conduite des gaz d'échappement (2) en aval dudit au moins un dispositif d'épuration des gaz d'échappement (3) ou en aval d'au moins un dispositif d'épuration des gaz d'échappement (3).

8. Véhicule, en particulier véhicule utilitaire ou véhicule marin, en particulier bateau, muni d'un moteur à combustion interne équipé d'un système d'échappement (1) selon l'une quelconque des revendications précédentes.
